# EUROPÄISCHE PATENTSCHRIFT

(11) **EP 0 490 080 B1**
(45) Veröffentlichungstag und Bekanntmachung des Hinweises auf die Patenterteilung: **24.05.1995**
(21) Anmeldenummer: 91118867.0
(22) Anmeldetag: 06.11.1991
(51) Int. Cl.: B01D 29/11, B01D 29/96, B01D 35/027

(54) **Vorrichtung zur Aufnahme eines Filterelementes**
Apparatus for the incorporation of a filter element
Dispositif pour la réception d'un élément de filtrage

(30) Priorität: 08.12.1990 DE 4039192
(43) Veröffentlichungstag der Anmeldung: 17.06.1992
(73) Patentinhaber: HYDAC FILTERTECHNIK GMBH, D-66280 Sulzbach (DE)
(72) Erfinder: Sann, Norbert, W-6600 Saarbrücken (DE)
(74) Vertreter: Patentanwälte Bartels und Partner

(56) Entgegenhaltungen:
- EP-A- 0 249 395
- FR-A- 2 251 348
- US-A- 1 698 204
- US-A- 3 347 386
- US-A- 4 282 098

## Beschreibung

Die Erfindung betrifft eine Vorrichtung zur Aufnahme eines Filterelementes in einem Gehäuseteil, der eine Eintritts- und Austrittsöffnung für ein Fluid und an letzterer einen Sitz aufweist, an den das Filterelement mittels einer Haltevorrichtung andrückbar ist, die ein an eine Anlagefläche des Filterelements anlegbares Andrückglied aufweist, wobei ein Dichtelement am Sitz das ungefilterte Fluid vom gefilterten trennt und der Gehäuseteil mit einem Bereich seiner Außenwandung über ein zweites Dichtelement dichtend in Anlage mit einem Aufnahmekörper ist, der mittels eines dritten Dichtelements und zugehöriger Halteelemente in abdichtender Verbindung an einer Wand eines Behälters befestigbar ist.

Vorrichtungen dieser Art (DE-OS 19 09 130) sind bevorzugt bei Hydraulikanlagen einsetzbar. Bei solchen Anwendungen ist ein Filterelement oder sind mehrere Filterelemente im zugeordneten Behälter, beispielsweise in einem Tank für Hydraulikflüssigkeit, als Rücklauffilter für die Hydraulikflüssigkeit eingebaut. Bei den Filterelementen kann es sich um bei Verschmutzung auszuwechselnde Filterpatronen handeln. Zusätzlich kann auch eine Verschmutzungs-Anzeigeeinrichtung vorhanden sein. Derartige Vorrichtungen sind beispielsweise auch bei Kraftstoff- oder Schmierstoffiltern vorteilhaft einsetzbar, die für den Tankeinbau vorgesehen sind.

Bei bekannten Vorrichtungen der eingangs erwähnten Art ergeben sich in Betrieb in vielen Fällen Schwierigkeiten, und zwar insbesondere bei Anwendungsfällen, bei denen das betreffende Fluid mit verhältnismäßig hoher Durchflußrate das Filterelement durchströmt. Durch die hierbei am Filterelement angreifenden großen Strömungskräfte kommt es vielfach zu unerwünschten Bewegungen des Filterelementes relativ zu dem es aufnehmenden Gehäuseteil, wodurch u.a. auch die Abdichtung zwischen dem Filterelement und seinem Sitz am Gehäuseteil beeinträchtigt wird

Der Erfindung liegt die Aufgabe zugrunde, eine Vorrichtung der in Betracht stehenden Art zu schaffen, bei der eine einwandfreie Lagesicherung des Filterelementes innerhalb des ihn aufnehmenden Gehäuseteiles gewährleistet ist.

Diese Aufgabe ist erfindungsgemäß durch eine Vorrichtung mit den Merkmalen des Anspruches 1 gelöst.

Durch die erfindungsgemäß an der Haltevorrichtung ausgebildete, mit dem Filterelement zusammenwirkende Verdrehsicherung mit formschlüssigem Eingriff zwischen Anschlagflächen am Haltebügel und anzugeordneten Gegenflächen des Filterelementes wird jegliche Drehbewegung des Filterelementes relativ zum Gehäuseteil ausgeschlossen. Wie man weiß, führen gerade Drehbewegungen des Filterelementes, wie sie bei den bekannten Vorrichtungen bei höheren Durchflußraten auftreten, zu besonderen Beeinträchtigungen der Betriebssicherheit der gesamten Hydraulikanlage.

Die Erfindung gewährleistet demgegenüber eine einwandfreie Lagesicherung des Filterelements, wodurch erreicht wird, daß unter allen Betriebsbedingungen eine einwandfreie Abdichtung zwischen Filterelement und dem Sitz am Gehäuseteil aufrechterhalten bleibt.

Das im Gehäuseteil aufnehmbare Filterelement ist vorzugsweise mittels des Haltebügels lösbar mit dem Gehäuseteil verbindbar. Der Haltebügel kann mittels einem oder mehreren der Halteelemente gesichert sein, die der Befestigung des Aufnahmekörpers für den Gehäuseteil dienen, in dem das Filterelement untergebracht ist. Bei Verwendung von Halteelementen in Form von an der Innenwand des Behälters befestigten Gewindebolzen kann der Haltebügel also beispielsweise mittels der gleichen Muttern gesichert sein, die auch zur Lagefixierung des Aufnahmekörpers dienen. Der Haltebügel kann auch mit dem Aufnahmekörper verbunden sein.

Nachstehend ist die Erfindung anhand von in der Zeichnung dargestellten Ausführungsbeispielen im einzelnen erläutert.

Es zeigen:
- Fig.1: einen abgebrochen gezeichneten Teillängsschnitt eines Ausführungsbeispiels der Vorrichtung;
- Fig.2: eine Draufsicht des Ausführungsbeispiels, wobei jedoch ein Behälterdeckel weggelassen ist;
- Fig.3: einen in noch größerem Maßstab und nur ausschnittsweise gezeichneten Längsschnitt eines Halteelements für die Verwendung bei einer Abwandlung des Ausführungsbeispiels gemäß Fig.1 und 2;
- Fig.4: einen Längsschnitt eines Aufnahmekörpers und eines Haltebügels für ein weiteres Ausführungsbeispiel, wobei der Haltebügel in abgehobener Stellung gezeigt ist;
- Fig.5: einen Längsschnitt entsprechend Fig.4, wobei der Haltebügel in an ein Filterelement angelegter Stellung gezeigt ist;
- Fig.6: eine Draufsicht auf das in Fig.5 Gezeigte und
- Fig.7 und 8: abgebrochen gezeichnete Teillängsschnitte von Aufnahmekörpern und Haltebügeln weiterer Ausführungsbeispiele der Vorrichtung.

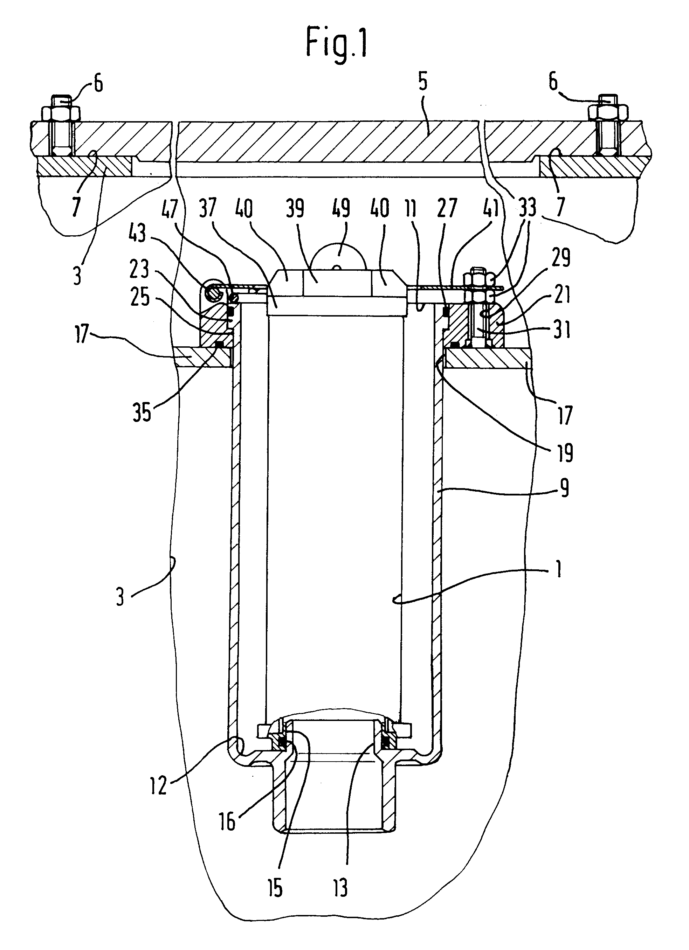

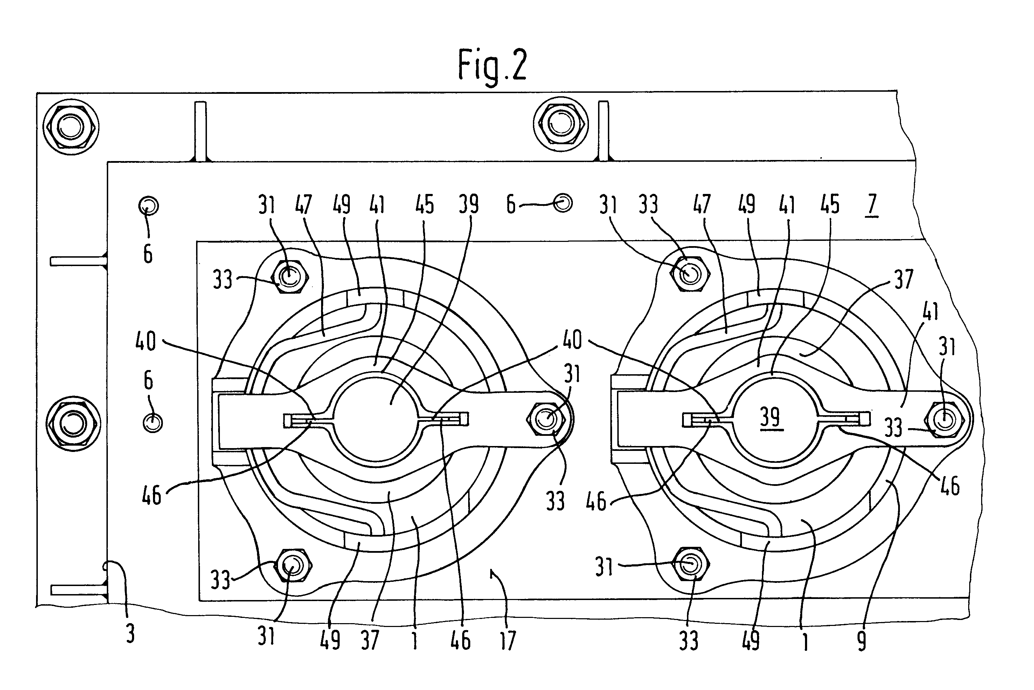

Fig.1 und 2 zeigen ein erstes Ausführungsbeispiel für eine Rücklauf-Filtereinrichtung einer Hydraulikanlage, wobei mehrere Filterelemente 1 gemeinsam in einen Behälter eingebaut sind, bei dem es sich um einen Tank 3 für Hydraulikflüssigkeit handelt, von dem in Fig.2 ein größerer Teil seines Umrisses zu sehen ist.
Fig.2 zeigt den Tank 3 ohne obere Abdeckung, die (siehe Fig.1) als flacher Behälterdeckel 5 ausgebildet ist, der mittels Befestigungsschrauben 6 an einer ebenen Dichtfläche 7 befestigbar ist, die sich durchgehend längs des oberen Randbereichs des Tanks 3 erstreckt. Bei abgenommenem Deckel 5 sind die Filterelemente 1 im Bereich ihrer oberen Stirnseiten 37 von oben her frei zugänglich, wie es Fig.2 zeigt.

Die Filterelemente 1 können auswechselbare, patronenartige Filter üblicher Bauart sein, wobei das Filtermedium, beispielsweise Papiervlies, Drahtgewebe od.dgl., an das jeweilige Betriebsfluid und den in Frage kommenden Betriebsüberdruck angepaßt ist. Jedes Filterelement 1, das beim Ausführungsbeispiel im großen und ganzen kreiszylinderförmig ist, befindet sich in einem eigenen Gehäuseteil in Form eines Filtertopfes 9, der in Form und Abmessung in der üblichen Weise an das Filterelement 1 angepaßt ist, also im vorliegenden Fall einen ebenfalls im wesentlichen kreiszylindrischen Körper bildet. Der Filtertopf 9 ist an seinem einen, obenliegenden Ende 11 offen. An gegenüberliegenden, unteren Ende 12 ist der Filtertopf 9 geschlossen, weist jedoch eine zentrale Austrittsöffnung 13 für den Austritt des gereinigten Fluids auf. Am äußeren Öffnungsrand bildet die Austrittsöffnung 13 einen Sitz 15, an dem die zugekehrte Stirnseite des Filterelements 1 abgestützt ist, wobei ein Dichtelement 16 den endseitigen Auslaß des inneren Hohlraums des Filterelementes 1 gegenüber dem Sitz 15 abdichtet.

Das obere Ende 11 des Filtertopfes 9, das die Eintrittsöffnung für das zu reinigende Fluid bildet, mündet in denjenigen Bereich des Tankes 3, in dem sich das verschmutzte Fluid befindet. Dieser Bereich liegt oberhalb einer im Tank 3 horizontal angeordneten Innenwand 17, die eine durchgehende Trennwand zwischen dem oberen Tankbereich für verschmutztes Fluid und dem unteren Bereich für gereinigtes Fluid bildet. Die Innenwand 17 weist für jeden Filtertopf 9 einen kreisrunden Durchbruch 19 auf, in den der betreffende Filtertopf 9 bei abgenommenem oberen Deckel 5 von oben her einsetzbar ist. In seiner Endlage nach dem Einsetzen befindet sich das obere offene Ende 11 des Filtertopfes 9 etwas oberhalb der Innenwand 17, so daß die Eintrittsöffnung des Filtertopfes 9 in den Bereich des verunreinigten Fluids innerhalb des Tanks 3 mündet.

Für die Festlegung der Endlage des Filtertopfes 9 relativ zur Innenwand 17 befindet sich am Öffnungsrand des Durchbruchs 19 der Innenwand 17 ein Aufnahmekörper in Form eines Ringkörpers 21, in dessen Ringöffnung der Außenrandbereich des oberen Endes 11 des Filtertopfes 9 aufgenommen ist.

Letzterer weist am oberen Ende 11 eine flanschartige Erweiterung 23 auf. In der Endlage des Filtertopfes 9 ist die Erweiterung 23 mit ihrer inneren Schulterfläche in Anlage an einer Ringschulter 25, die durch eine Stufe an der Ringöffnung des Ringkörpers 21 gebildet ist. Zur Abdichtung der Außenwandung des Filtertopfes 9 gegenüber dem Ringkörper 21 ist in die Umfangsfläche der flanschartigen Erweiterung 23 eine Ringnut eingearbeitet, in der ein Dichtelement in Form eines Dichtringes 27 sitzt, der die Abdichtung gegenüber der zugekehrten Innenfläche des Ringkörpers 21 sicherstellt.

Der Ringkörper 21 seinerseits ist mit Hilfe mehrerer Halteelemente, die rings um den Umfang des Ringkörpers 21 in regelmäßigen Winkelabständen verteilt sind, an der Innenwand 17 festgelegt. Beim Ausführungsbeispiel sind Befestigungsschrauben als Halteelemente vorgesehen, genauer gesagt, jeweils drei Gewindebolzen 31 für jeden Ringkörper 21. Die Gewindebolzen 31 sind je endseits mit der Oberseite der Innenwand 17 verschweißt, so daß sie an der Oberseite der Innenwand 17 vertikale Stehbolzen bilden, die passende Bohrungen 29 im Ringkörper 21 durchgreifen. Auf den überstehenden Gewindeabschnitt der Gewindebolzen 31 aufgeschraubte Muttern 33 spannen den Ringkörper 21 an der Oberseite der Innenwand 17. Ein Dichtring 35 in einer Ringnut, die in der der Innenwand 17 zugekehrten Fläche des Ringkörpers 21 konzentrisch zur Ringöffnung ausgebildet ist, bildet die Abdichtung zwischen Ringkörper 21 und Innenwand 17.

An seiner oberen, dem offenen Ende 11 des Filtertopfes 9 benachbarten Stirnseite 37 weist das Filterelement 1 einen zentral gelegenen kreiszylinderförmigen Vorsprung 39 und zwei flügelartige Zungen 40 auf, die an einander diametral gegenüberliegenden Seiten des Vorsprungs 39 sich von diesem, bezogen auf die Längsachse des Filterelements 1, in Radialrichtung erstrecken. Das Filterelement 1 wirkt an seiner Stirnseite 37 mit einer Haltevorrichtung zusammen, die das Filterelement 1 am unteren Ende 12 an den Sitz 15 im Filtertopf 9 anpreßt. Bein gezeigten Ausführungsbeispiel ist zum Erzeugen dieser Anpreßkraft ein Andrückglied in Form eines aus Blech gefertigten Haltebügels 41 vorgesehen, dessen eines Ende über ein Scharnier 43 am Ringkörper 21 schwenkbar gelagert ist. Der Bügel 41 erstreckt sich in seiner an die Stirnseite 37 des Filterelements 1 angelegten Arbeitsstellung parallel zur Innenwand 17 quer über die Stirnseite 37 und ist mit seinem dem Scharnier 43 entgegengesetzten anderen Ende durch eine Mutter 33 auf einem der Gewindebolzen 31 gesichert, der auch zur Bildung eines Halteelements für den Ringkörper 21 dient. Der die Stirnseite 37 des Filterelements 1 übergreifende Teil des Haltebügels 41 weist eine zentrale Ausnehmung 45 (siehe Fig.2) für den Durchtritt des Vorsprungs 39 sowie in die Ausnehmung 45 einmündende, sich in Längsrichtung des Haltebügels 41 erstreckende Schlitzöffnungen 46 auf, die für den Eingriff der Zungen 40 an der Stirnseite 37 des Filterelementes 1 bestimmt sind.

Die Funktionsweise des Ausführungsbeispiels ist folgende: Bei abgenommenem Behälterdeckel 5 sind die Filterelemente 1 an ihrer freiliegenden oberen Stirnseite 37 zugänglich. Nach Lösen der Mutter 33, die den Haltebügel 41 in der in den Figuren gezeigten, an die Stirnseite 37 angelegten Stellung hält, ist der betreffende Haltebügel 41 durch Schwenken um die Achse des Scharniers 43 von der Stirnseite 37 abhebbar. Das Filterelement 1 kann nun nach oben herausgehoben werden. Nach Abheben des Haltebügels 41 und Aufheben der Anpreßkraft, die über den Sitz 15 auf den Filtertopf 9 übertragen wird, kann auch dieser, beispielsweise zum Zweck der Reinigung, nach oben bewegt werden, wobei sich die flanschartige Erweiterung 23 des Filtertopfes 9 von der Ringschulter 25 am Ringkörper 21 abhebt.

Um das Ausheben des Filtertopfes 9 zu erleichtern, ist jeder Filtertopf 9 mit einem Tragbügel 47 versehen, der in hochgezogenen Seitenrandabschnitten 49, die am Filtertopf 9 am oberen Ende 11 einander gegenüberliegend ausgebildet sind, schwenkbar gelagert ist.

Die Innenseiten der Schlitzöffnungen 46 jedes Haltebügels 41 bilden Anschlagflächen, die in Zusammenwirkung mit den in sie eingreifenden Zungen 40 des Filterelements 1 eine Verdrehsicherung für dieses bilden, um eine Drehung des Filterelementes 1 um seine Längsachse zu verhindern.

Wie aus Fig.1 zu ersehen ist, kann der Durchbruch 19 in der Innenwand 17 des Tanks 3 etwas größer ausgebildet sein als der Durchmesser der Ringöffnung des Ringkörpers 21. Somit bildet lediglich der Ringkörper 21 die eigentliche Aufnahme, in der der Filtertopf 9 unter Bildung der Abdichtung aufgenommen ist. Es braucht daher lediglich der Ringkörper 21 besonders genau bearbeitet und positioniert zu sein.

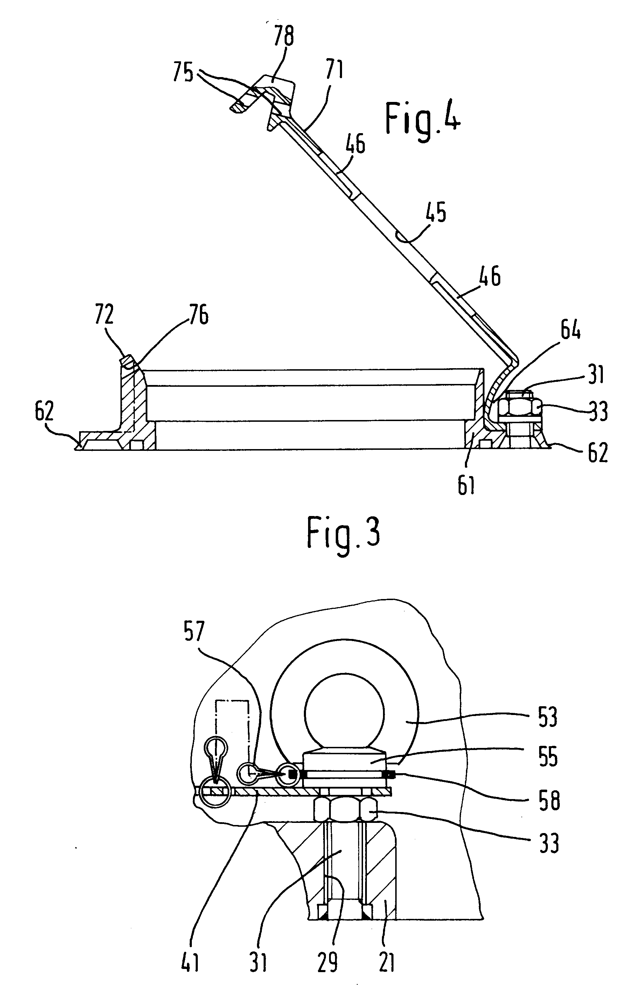

Beim gezeigten Ausführungsbeispiel ist die zur Sicherung des Haltebügels 41 in der an die Stirnseite 37 des Filterelementes 1 angelegten Arbeitsstellung dienende Mutter 33, ebenso wie die den Ringkörper 21 festlegenden Muttern, als normale Sechskantmutter ausgebildet. Diejenige Mutter, die für das Abheben und Anlegen des Haltebügels 41 gelöst werden muß, kann jedoch auch durch eine Zusatzeinrichtung unverlierbar gesichert sein. Eine hierfür geeignete Ausführungsform wird weiter unten unter Bezug auf ein in Fig.4 gezeigtes Ausführungsbeispiel beschrieben.

Anstatt den Haltebügel 41 an einem Ende über ein Scharnier 43 am Ringkörper 21 schwenkbar zu lagern, könnte der Haltebügel auch an beiden Enden an je einem Halteelement des Ringkörpers 21 festgelegt sein.

In diesem Falle wären anstelle der gezeigten drei Gewindebolzen 31, die um 120 Winkelgrad zueinander versetzt angeordnet sind, vier in 90°-Abständen voneinander angeordnete Halteelemente vorgesehen.

Fig.3 zeigt ein Ausführungsbeispiel mit einer Haltevorrichtung, deren Andrückglied wie bei dem Beispiel von Fig.1 und 2 als Haltebügel 41 ausgebildet ist. Die für das Abheben des Haltebügels 41 zu lösende Mutter ist hierbei nicht als Sechskantmutter ausgebildet, sondern eine Spezialmutter 55, die mit einer ringförmigen Handhabe 53 versehen ist, so daß sie wie eine Flügelmutter manuell drehbar ist. Zusätzlich ist die Mutter 55 mittels einer Sicherungskette 57 unverlierbar gesichert. Ein Ende der Kette 57 ist am Haltebügel 41 befestigt. Das andere Ende der Kette 57 ist an einer Ringscheibe 58 festgelegt, die sprengringartig, jedoch verdrehbar, in einer Ringnut der Mutter 55 sitzt.

Fig.4 bis 6 zeigen ein Ausführungsbeispiel, bei dem als Aufnahmekörper, in dem der Filtertopf 9 mit seiner endseitigen, flanschartigen Erweiterung 23 aufgenommen ist, kein Ringkörper aus Metall, sondern ein Ringkörper 61 aus glasfaserverstärktem Kunststoff vorgesehen ist. In gleicher Weise wie bei den zuvor beschriebenen Ausführungsbeispielen, sind als Halteelemente für den Ringkörper 61 Gewindebolzen 31 mit Muttern 33 vorgesehen. Der Ringkörper 61 weist für die Abdichtung gegenüber der Innenwand 17 nicht nur einen Dichtring 35, entsprechend den zuvor beschriebenen Ausführungsbeispielen, auf, sondern der Ringkörper 61 bildet mit seinem verjüngten außenliegenden Umfangsbereich eine Dichtlippe 62, die unter Vorspannung an der Innenwand 17 anliegt.

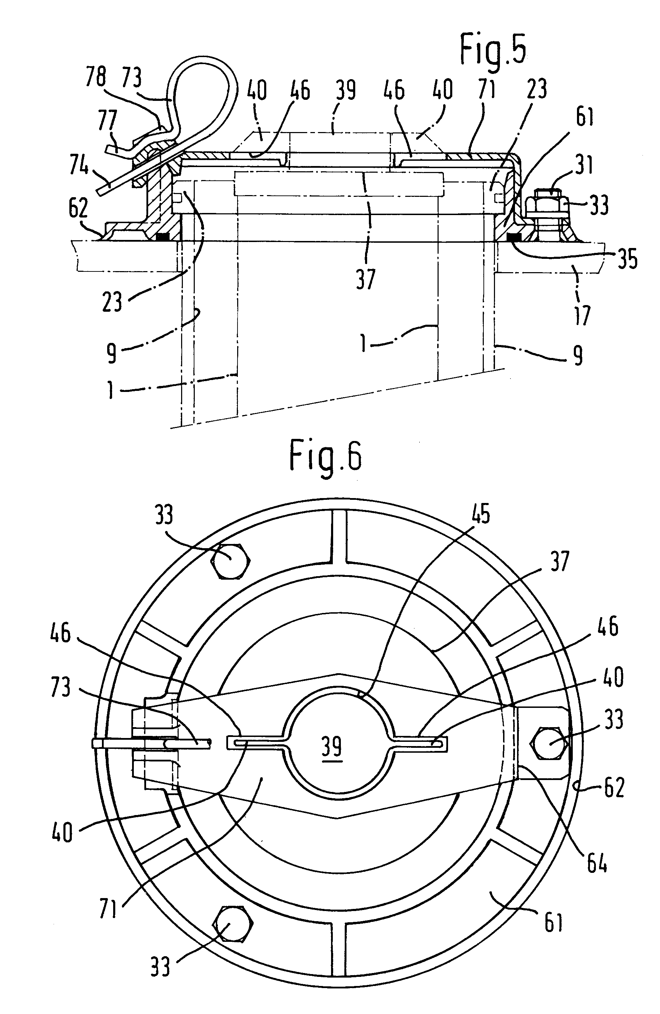

Die Haltevorrichtung weist als Andrückglied einen Haltebügel 71 auf, der, wie der Ringkörper 61, aus glasfaserverstärktem Kunststoff besteht und mit seinem einen Ende mittels der Mutter 33 an einem der Gewindebolzen 31 festgelegt ist. Der dieser Anbringstelle benachbarte Bereich des Haltebügels 71 ist ausreichend biegbar, um ein Biegescharnier 64 zu bilden, so daß der Haltebügel zum Anlegen an die Stirnseite 37 des Filterelementes 1 und zum Abheben davon schwenkbar ist. Das dem Biegescharnier 64 entgegengesetzte Ende des Haltebügels 71 ist am zugeordneten, hochgezogenen Randabschnitt 72 des Ringkörpers 61 mittels einer Steckfeder 73 festlegbar. Diese ist in etwa haarnadelförmig gebogen und weist einen geraden Federschenkel 74 auf, der in Öffnungen 75 und 76 im Haltebügel 71 bzw. im Ringkörper 61 einsteckbar ist, wie es Fig.6 zeigt. Diese Figur zeigt auch, daß der zweite Federschenkel 77 in eine Nut 78 des Haltebügels 71 eingreift, wobei er mit Federkraft an dem Grund der Nut klemmend anliegt, so daß die Steckfeder 73 im eingesteckten Zustand kraftschlüssig gesichert ist.

In dem Bereich zwischen seinen beiden Enden ist der Haltebügel 71 so geformt wie der Haltebügel 41 beim erstbeschriebenen Beispiel, d.h. er weist eine zentrale Ausnehmung 45 für die Aufnahme des Vorsprungs 39 des Filterelements 1 auf sowie in die Ausnehmung 45 mündende Schlitzöffnungen 46, in die die Zungen 40 des Filterelements 1 eingreifen, so daß eine Verdrehsicherung gebildet wird.

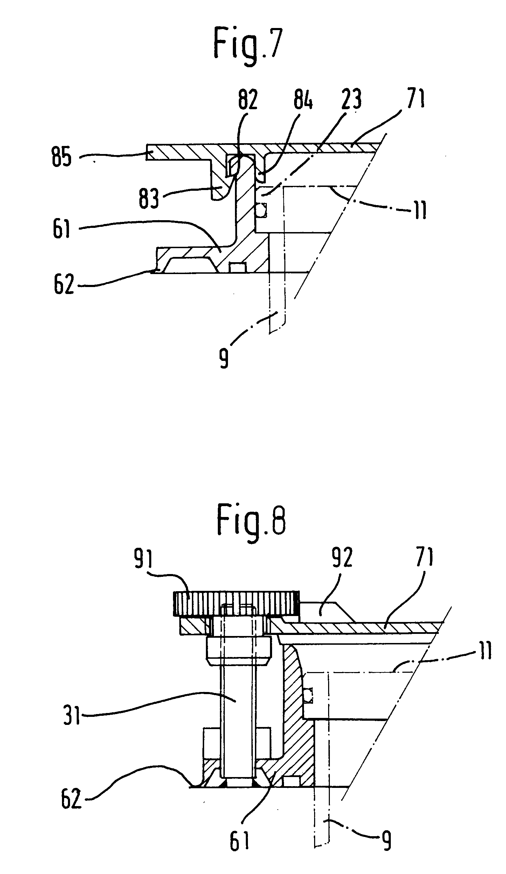

Fig.7 zeigt ein Ausführungsbeispiel, bei dem der Haltebügel 71 mit dem zugeordneten, hochgezogenen Randabschnitt des Ringkörpers 61 mittels einer Schnappsicherung verbunden ist. Diese besteht aus einer Riegelfläche 82 am Ringkörper 61, die durch einen Riegelvorsprung an einer biegsamen Riegelnase 83 des Haltebügels 71 hintergriffen wird, wenn der Haltebügel 71 in die in Fig.7 gezeigte Riegelstellung gebracht wird. In dieser Riegelstellung ist der Rand des Ringkörpers 71 zwischen der Riegelnase 83 und einem Widerlager 84 aufgenommen, das am Haltebügel 71 angeformt ist. Das Lösen des Riegeleingriffs erfolgt durch Aufbringen einer Kraft in Abheberichtung am äußeren Ende 85 des Haltebügels 71, wobei sich aufgrund der Abstützung am Widerlager 84 lediglich der äußere Endabschnitt des Haltebügels 71 verbiegt, so daß die Riegelnase 83 mit ihrem Vorsprung außer Eingriff mit der Riegelfläche 82 kommt.

Fig.8 zeigt ein Ausführungsbeispiel, bei dem das dem Biegescharnier entgegengesetzte Ende des Haltebügels 71 auf einem der Gewindebolzen 31 mittels einer Rändelmutter 91 festgelegt ist. Die Rändelung am Umfang der Rändelmutter 91 ist mit einer Rastzunge 92 im Eingriff, die an der Oberseite des Haltebügels 71 angeformt ist und aufgrund ihrer Flexibilität eine kraftschlüssige Verdrehsicherung für die Rändelmutter 91 bildet.

Die vorstehende Beschreibung und die Zeichnung beschränken sich nur auf die Angabe von Merkmalen, die für die beispielsweise Verkörperung der Erfindung wesentlich sind.

## Patentansprüche

1. Vorrichtung zur Aufnahme eines Filterelementes (1) in einem Gehäuseteil (9), der eine Eintritts- und Austrittsöffnung für ein Fluid und an letzterer einen Sitz (15) aufweist, an den das Filterelement (1) mittels einer Haltevorrichtung andrückbar ist, die ein an eine stirnseitige Anlagefläche des Filterelementes (1) anlegbares Andrückglied (41; 51) aufweist, wobei ein Dichtelement (16) am Sitz (15) das ungefilterte Fluid vom gefilterten trennt und der Gehäuseteil (9) mit einem Bereich (25) seiner Außenwandung über ein zweites Dichtelement (27) dichtend in Anlage mit einem Aufnahmekörper (21) ist, der mittels eines dritten Dichtelementes (35) und zugehöriger Halteelemente (31, 33) in abdichtender Verbindung an einer Wand (17) eines Behälters (3) befestigbar ist, dadurch gekennzeichnet, daß das Andrückglied (41; 51) der Haltevorrichtung durch einen über eine scharnierartige Anordnung (43; 64) am Aufnahmekörper (21; 61) schwenkbar angeordneten Haltebügel (41; 71) gebildet ist, der in seiner an der Anlagefläche des Filterelementes (1) anliegenden Arbeitsstellung lösbar festlegbar ist, und daß der Haltebügel (41; 71) mindestens eine Anschlagfläche (46) aufweist, die bei der Arbeitsstellung in einen formschlüssigen Eingriff mit einer an der Anlagefläche des Filterelementes (1) ausgebildeten Gegenfläche (40) bringbar ist, um eine Sicherung des Filterelementes (1) gegen Verdrehung relativ zum Gehäuseteil (9) zu bilden.

2. Vorrichtung nach Anspruch 1, dadurch gekennzeichnet, daß die Anschlagfläche am Haltebügel (41; 71) durch die Ränder mindestens einer an ihm vorgesehenen Schlitzöffnung (46) gebildet ist, die für den Eingriff einer an der Anlagefläche des Filterelementes (1) vorgesehenen, vorspringenden Zunge (40) bestimmt ist, die die Gegenfläche bildet.

3. Vorrichtung nach Anspruch 1 oder 2, dadurch gekennzeichnet, daß der Haltebügel (41; 71) mittels einer Schraubverbindung (31, 33) mit dem Aufnahmekörper (21; 61) verbindbar ist.

4. Vorrichtung nach einem der Ansprüche 1 bis 3, dadurch gekennzeichnet, daß der Haltebügel (71) aus einem flexiblen Kunststoff gefertigt und über einen ein Biegescharnier (64) bildenden biegsamen Bereich schwenkbar am Aufnahmekörper (61) angeordnet ist.

5. Vorrichtung nach Anspruch 4, dadurch gekennzeichnet, daß der Haltebügel (71) an seinem dem Biegescharnier (64) entgegengesetzten Endbereich mittels einer Schnappverbindung (82, 83) oder einer Steckverbindung (74, 75, 76) am Aufnahmekörper (61) in der Arbeitsstellung festlegbar ist.

## Claims

1. Apparatus for receiving a filter element (1) in a housing part (9), which comprises an inlet and outlet opening for a fluid and on the latter a seat (15), against which the filter element (1) can be pressed by means of a retaining device, which comprises a pressing member (41; 51) able to be applied against a contact surface on the end face of the filter element (1), a sealing member (16) on the seat (15) separating the unfiltered fluid from the filtered and the housing part (9) being in sealed abutment with a receiving body (21) by a region (25) of its outer wall by way of a second sealing member (27), which receiving body (21) can be attached to a wall (17) of a container (3) in sealed connection by means of a third sealing member (35) and associated retaining members (31, 33), characterised in that the pressing member (41; 51) of the retaining device is formed by a retaining bracket (41; 71) arranged to tilt on the receiving body (21; 61) by way of a hinge-like arrangement (43; 64), which retaining bracket can be releasably fixed in its working position bearing against the contact surface of the filter element (1), and that the retaining bracket (41; 71) comprises at least one contact surface (46), which in the working position can be brought into positive engagement with a counter-surface (40) formed on the contact surface of the filter element (1), in order to protect the filter element (1) against rotation relative to the housing part (9).

2. Apparatus according to Claim 1, characterised in that the contact surface on the retaining bracket (41; 71) is formed by the edges of at least one slit opening (46) provided on the latter, which is intended for the engagement of a projecting tongue (40) provided on the contact surface of the filter element (1), which tongue forms the counter-surface.

3. Apparatus according to Claim 1 or 2, characterised in that the retaining bracket (41; 71) can be connected to the receiving body (21; 61) by means of a screw connection (31, 33).

4. Apparatus according to one of Claims 1 to 3, characterised in that the retaining bracket (71) is produced from a flexible synthetic material and is arranged to tilt on the receiving body (61) by way of a flexible region forming a bending hinge (64).

5. Apparatus according to Claim 4, characterised in that at its end region opposite the bending hinge (64), the retaining bracket (71) can be fixed to the receiving body (61) in the working position by means of a snap-action connection (82, 83) or a plug-in connection (74, 75, 76).

## Revendications

1. Dispositif pour le logement d'un élément filtrant (1) dans une partie de boîtier (9), qui présente un orifice d'admission et un orifice d'échappement pour un fluide et sur ce dernier orifice un siège (15) sur lequel l'élément filtrant peut être serré au moyen d'un dispositif de maintien qui présente un élément de serrage (41, 51) applicable sur une face d'application frontale dudit élément filtrant (1), tandis qu'un élément d'étanchéité (16) sépare, sur le siège (15), le fluide non filtré du fluide filtré et la partie de boîtier (9) s'appliquant par une zone (25) de sa paroi extérieure, hermétiquement au moyen d'un deuxième élément d'étanchéité (27), sur un corps de réception (21) lequel peut être fixé de manière étanche au moyen d'un troisième élément d'étanchéité et des éléments de maintien y afférents (31, 33) sur une paroi (17) d'un récipient (3), caractérisé en ce que l'élément de serrage (41, 51) du dispositif de maintien est constitué d'un étrier (41, 71) disposé de manière à pouvoir pivoter sur le corps de réception (21, 61) par un dispositif du type charnière (43, 64), étrier qui est immobilisable transitoirement dans sa position active d'application sur la face prévue à cet effet de l'élément filtrant (1), et en ce que ledit étrier de maintien (41, 71) présente au moins une face de butée (46) qui, dans la position active, peut venir s'engager géométriquement dans une contre-face (40) formée sur la face d'application de l'élément filtrant (1) afin d'assurer l'élément filtrant (1) contre toute torsion par rapport à l'élément de boîtier (9).

2. Dispositif selon la revendication 1, caractérisé en ce que la face de butée sur l'étrier (41, 71) est formée par les bords d'au moins une fente d'ouverture (46) prévue sur cet étrier, cette fente étant destinée à l'engagement d'une languette en saillie (40) qui constitue la contre-face est qui est prévue sur la face d'application de l'élément filtrant (1).

3. Dispositif selon la revendication 1 ou 2, caractérisé en ce que l'étrier (41, 71) peut être relié au corps de réception (21, 61) au moyen d'un boulonnage (31, 33).

4. Dispositif selon l'une des revendications 1 à 3, caractérisé en ce que l'étrier (71) est fabriqué en une matière plastique flexible et qu'il est disposé sur le corps de réception (61) de manière à pouvoir pivoter grâce à la présence d'une zone flexible qui forme une charnière (64).

5. Dispositif selon la revendication 4, caractérisé en ce que l'étrier (71), sur sa partie terminale opposée à la charnière flexible (64), peut être appliqué de manière fixe, en position active, sur le corps de réception, au moyen d'un assemblage par encliquetage (82, 83) ou d'un assemblage par enfichage (74, 75, 76).
